# FASCICULE DE BREVET EUROPEEN

(11) **EP 4 142 171 B1**
(45) Date de publication et mention de la délivrance du brevet: **24.09.2025**
(21) Numéro de dépôt: 22191157.1
(22) Date de dépôt: 19.08.2022
(51) Int. Cl.: H04B 3/58, H04L 12/00, H04L 45/00, H04W 40/00

(54) **PROCEDE DE TRANSMISSION ET DISPOSITIF NOEUD IMPLEMENTANT LEDIT PROCEDE**
ÜBERTRAGUNGSVERFAHREN UND KNOTENVORRICHTUNG FÜR DIE IMPLEMENTIERUNG DIESES VERFAHRENS
TRANSMISSION METHOD AND NODE DEVICE IMPLEMENTING SAID METHOD

(30) Priorité: 26.08.2021 FR 2108917
(43) Date de publication de la demande: 01.03.2023
(73) Titulaire: Sagemcom Energy & Telecom SAS, 92270 Bois-Colombes (FR)
(72) Inventeur: BAROIS, Jérôme, 92500 RUEIL MALMAISON (FR); JUAN, Guillaume, 92500 RUEIL MALMAISON (FR)
(74) Mandataire: Cabinet Le Guen Maillet

(56) Documents cités:
- WO-A1-2015/094823
- US-A1- 2017 187 661
- ANIL MENGI G3-PLC ALLIANCE GERMANY: "Narrowband OFDM PLC specifications for G3-PLC networks;C18", vol. 18/15, 18 March 2021 (2021-03-18), pages 1 - 277, XP044307267, Retrieved from the Internet <URL:https://www.itu.int/ifa/t/2017/sg15/docs/rgm/Q18-210308/C/T17-SG15RGM-Q18-210308-C-0018.docx> [retrieved on 20210318]
- SAPUTRO N ET AL: "A survey of routing protocols for smart grid communications", vol. 56, no. 11, 1 January 2012 (2012-01-01), pages 2742 - 2771, XP009530917, ISSN: 1389-1286, Retrieved from the Internet <URL:https://api.elsevier.com/content/article/PII:S1389128612001429?httpAccept=text/plain> DOI: 10.1016/J.COMNET.2012.03.027

## Description

### DOMAINE TECHNIQUE

Au moins un mode de réalisation concerne un procédé de transmission pour transmettre un fragment d'un paquet IP à partir d'un premier dispositif nœud vers un troisième dispositif nœud au travers d'un second dispositif nœud appartenant à un voisinage réseau desdits premier et troisième dispositifs nœuds. Au moins un mode de réalisation concerne un dispositif nœud implémentant ledit procédé de transmission.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif nœud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs nœuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Dans une évolution de la norme G3-PLC définie dans une Annexe H de la recommandation ITU-T G.9903 (2017) Amendement 1 (05/2021), appelée G3-PLC Hybrid PLC & RF, un canal RF (acronyme de radio-fréquences) peut être utilisé à la place d'une desdites bandes fréquentielles PLC. Plus précisément, cette version de la norme permet l'utilisation occasionnelle d'une couche physique radio secondaire basée sur une modulation SUN FSK telle que définie dans le standard IEEE 802.15.4:2015. Ainsi, en utilisant les différents média G3-PLC et RF pour transmettre des données, le réseau d'alimentation électrique maximise sa couverture et sa résilience. Un dispositif nœud réseau d'alimentation électrique capable d'émettre et de recevoir des données en utilisant les deux média (PLC et RF) est appelé nœud hybride.

Toutefois, dans G3-PLC Hybrid PLC & RF, le choix de communiquer entre deux nœuds hybrides du réseau de communication soit par courants porteurs en ligne sur une bande fréquentielle PLC soit par radio-fréquences sur un canal RF est déterminé au moment de la construction ou de la reconstruction des routes de communication. Ce choix du médium de communication utilisé entre deux nœuds hybrides du réseau est généralement fixe pendant plusieurs heures. Ainsi, les messages unicast sont transmis entre lesdits deux nœuds hybrides pendant cette durée soit sur une bande fréquentielle PLC soit sur un canal RF en fonction du choix effectué au moment de la construction ou reconstruction de route.

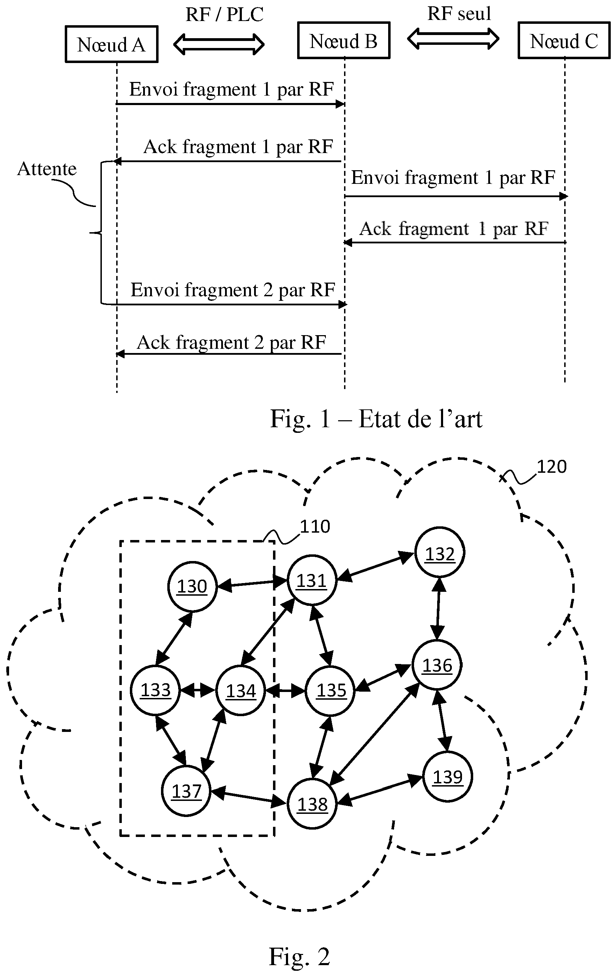

La **Fig. 1** illustre schématiquement un procédé de transmission de fragments d'un paquet IP selon l'état de l'art. Les dispositifs nœuds A et B sont des nœuds hybrides qui peuvent donc communiquer soit par PLC soit par RF. Le dispositif nœud C, quant à lui, ne peut communiquer avec le dispositif nœud B que par RF. Sur la Fig. 1, le dispositif nœud A envoie un premier fragment IP (fragment 1) au dispositif nœud B par radio-fréquences. Par exemple, lors de la construction de la route, il a été décidé que A et B communiquent par RF même s'ils avaient également la capacité de communiquer par PLC. En retour, le dispositif nœud B envoie un message d'acquittement au dispositif nœud A en utilisant le même médium de communication que celui sur lequel il a reçu le fragment 1. Le dispositif nœud B transmet également le fragment 1 au dispositif nœud C et reçoit en retour un message d'acquittement par radio-fréquences. Dès lors, le dispositif nœud A doit attendre avant de pouvoir envoyer le fragment 2 car le canal RF est déjà occupé pour les échanges du fragment 1 et du message d'acquittement entre les dispositifs nœuds B et C. Ainsi, il existe une latence importante dans la transmission des fragments d'un paquet IP.

La demande de brevet WO 2015/094823 divulgue un calcul dynamique de l'itinéraire d'une source pour éviter l'auto-interférence.

La demande de brevet US2017/187661 divulgue l'utilisation de plusieurs interfaces réseau lors de l'envoi de paquets de données et d'accusés de réception.

Il est souhaitable de pallier ces différents inconvénients de l'état de la technique. Il est notamment souhaitable de proposer un procédé de transmission de fragments de paquets IP entre les dispositifs nœuds d'un réseau d'alimentation électrique qui réduise le délai de transmission, i.e. la latence, des fragments de paquet IP entre dispositifs nœuds dudit réseau.

### EXPOSE DE L'INVENTION

Au moins un mode de réalisation concerne un procédé de transmission pour transmettre un fragment d'un paquet IP à partir d'un premier dispositif nœud vers un troisième dispositif nœud au travers d'un second dispositif nœud appartenant à un voisinage réseau desdits premier et troisième dispositifs nœuds. Les premier, second et troisième dispositifs nœuds appartiennent à un réseau d'alimentation électrique. Les premier et second dispositifs nœuds sont configurés pour communiquer par courants porteurs en ligne et par radio-fréquences alors que les second et troisième dispositifs nœuds ne peuvent communiquer qu'en utilisant un unique médium de communication (qui peut par exemple être les courants porteurs en ligne dans le cas où le seuil maximum d'utilisation des radio-fréquences est momentanément atteint), dit premier médium, parmi les courants porteurs en ligne et les radio-fréquences.

Le procédé de transmission comprend les étapes suivantes mises en œuvre par le second dispositif nœud :
- recevoir un premier fragment émis par ledit premier dispositif nœud soit par courants porteurs en ligne soit par radio-fréquences; et
- envoyer un message d'acquittement audit premier dispositif nœud en utilisant un second médium de communication sélectionné parmi les courants porteurs en ligne et les radio-fréquences de sorte qu'il soit différent dudit premier médium (sauf si cela impliquerait de choisir les radio-fréquences alors que le seuil maximum d'utilisation des radio-fréquences est atteint) ; et
- transmettre ledit premier fragment audit troisième dispositif nœud en utilisant ledit premier médium de communication.

Le procédé de transmission permet une alternance de médium de communication entre paires de dispositifs nœuds successifs. Ainsi, le temps de latence pour la transmission de fragments de paquets IP est réduit.

Dans un mode de réalisation particulier, le procédé de transmission comprend en outre l'étape suivante mise en œuvre par le premier dispositif nœud :
- transmettre audit second dispositif nœud les fragments du paquet IP suivant ledit premier fragment en utilisant uniquement ledit second médium de communication (sauf si cela impliquerait de choisir les radio-fréquences alors que le seuil maximum d'utilisation des radio-fréquences est atteint).

Dans un mode de réalisation particulier, ledit paquet IP est fragmenté conformément au protocole 6LowPAN.

Dans un mode de réalisation particulier, dans le cas où un fragment du paquet IP est transmis par courants porteurs en ligne, ledit fragment est transmis sur au moins une bande fréquentielle appartenant à un ensemble de bandes fréquentielles comprenant :
- la bande fréquentielle CENELEC A;
- la bande fréquentielle CENELEC B; et
- la bande fréquentielle FCC ou la bande fréquentielle ARIB.

Dans un mode de réalisation particulier, dans le cas où un fragment du paquet IP est transmis par radio-fréquences, ledit fragment est transmis sur une bande fréquentielle allant de 863 MHz à 870 MHz.

Un dispositif nœud intermédiaire entre un premier dispositif nœud et un second dispositif nœud est également décrit. Le dispositif nœud intermédiaire et lesdits second et troisième dispositifs nœuds appartiennent à un réseau d'alimentation électrique. Le dispositif nœud intermédiaire appartient à un voisinage réseau desdits premier et second dispositifs nœuds. Le premier dispositif nœud et le nœud intermédiaire sont configurés pour communiquer par courants porteurs en ligne et par radio-fréquences. Le second dispositif nœud et le dispositif nœud intermédiaire ne peuvent communiquer qu'en utilisant un unique médium de communication, dit premier médium, parmi les courants porteurs en ligne et les radio-fréquences. Le dispositif nœud intermédiaire comprend :
- des moyens pour recevoir un premier fragment émis par ledit premier dispositif nœud soit par courants porteurs en ligne soit par radio-fréquences; et
- des moyens pour envoyer un message d'acquittement audit premier dispositif nœud en utilisant un second médium de communication sélectionné parmi les courants porteurs en ligne et les radio-fréquences de sorte qu'il soit différent dudit premier médium ; et
- des moyens pour transmettre ledit premier fragment audit second dispositif nœud en utilisant ledit premier médium.

Un produit programme d'ordinateur est décrit qui comprend des instructions pour mettre en œuvre le procédé de transmission selon l'un des modes de réalisation précédents, lorsque ledit programme est exécuté par un processeur.

Un support de stockage est également décrit qui stocke un programme d'ordinateur comprenant des instructions pour mettre en œuvre le procédé de transmission selon l'un des modes de réalisation précédents, lorsque ledit programme est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un procédé de transmission de fragments d'un paquet IP selon l'état de l'art ;
[Fig. 2] illustre schématiquement un réseau de communication maillé ;
[Fig. 3] illustre schématiquement les différentes couches d'un modèle OSI dans le cas particulier de la norme G3-PLC Hybrid PLC et RF ;
[Fig. 4] illustre schématiquement un procédé de transmission de fragments d'un paquet IP selon un mode de réalisation particulier ;
[Fig. 5] illustre schématiquement un procédé de transmission de fragments d'un paquet IP selon un mode de réalisation particulier ;
[Fig. 6] illustre schématiquement un procédé de transmission de fragments d'un paquet IP selon un mode de réalisation particulier ;
[Fig. 7] illustre schématiquement une branche d'un réseau de communication maillé ; et,
[Fig. 8] illustre schématiquement un exemple d'architecture matérielle d'un dispositif nœud du réseau de communication maillé selon un mode de réalisation particulier.

### EXPOSE DETAILLE DE MODES DE REALISATION

La **Fig. 2** illustre schématiquement un réseau de communication maillé 120. Le réseau de communication maillé 120 est par exemple un réseau d'alimentation électrique de type AMM. Le réseau de communication maillé 120 s'appuie sur des communications par courants porteurs en ligne PLC ou par radio-fréquences RF pour permettre à un dispositif nœud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs nœuds du réseau de communication maillé 120. Le réseau de communication maillé 120 peut comporter d'autres dispositifs nœuds, par exemple installés au niveau de transformateurs électriques. Le réseau de communication 120 a donc une structure maillée, telle que représentée schématiquement sur la Fig. 1 grâce à des flèches, où des dispositifs nœuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa. Dans la suite du document, les termes « compteur électrique intelligent » et « compteur » sont utilisés de manière interchangeable.

La présente invention est ainsi particulièrement adaptée au contexte de la technologie G3-PLC Hybrid PLC & RF telle que définie dans la recommandation ITU-T G.9903 (2017) Amendement 1 (05/2021) et plus particulièrement dans l'Annexe H.

Le réseau de communication maillé 120 comporte ainsi une pluralité de dispositifs nœuds 130, 131, 132, 133, 134, 135, 136, 137, 138, 139. A chaque dispositif nœud du réseau de communication maillé 120 est associé un voisinage réseau. Sur la Fig. 1, le dispositif nœud 133 est associé à un voisinage réseau 110 englobant les dispositifs nœuds 130, 134 et 137. En effet, dans le réseau de communication maillé 120, un signal ou un message diffusé par un dispositif nœud (tel que le dispositif nœud 133) n'est en général pas visible en tout point dudit réseau de communication. Chaque dispositif nœud émetteur de signaux ou de messages dispose alors d'un voisinage réseau, c'est-à-dire d'un sous-ensemble dudit réseau de communication maillé 120 dans lequel tout dispositif nœud peut recevoir de manière intelligible lesdits signaux ou messages directement en provenance du dispositif nœud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif nœud à la source desdits signaux et aussi potentiellement en fonction de caractéristiques du canal de communication (atténuation, bruit, impédance...).

Le réseau de communication maillé 120 s'appuie sur un protocole de routage de type réactif, tel que le protocole LOADng (« Lightweight On-demand Ad hoc Distance-vector Routing Protocol - Next Generation » en anglais). Contrairement aux protocoles de routage de type proactif qui s'appuient sur une connaissance globale de topologie réseau, les protocoles de routage de type réactif s'appuient sur des découvertes de routes à la demande, chaque dispositif nœud du réseau ayant alors besoin uniquement d'avoir connaissance de son propre voisinage réseau pour router des données dans le réseau de communication maillé 120.

Pour découvrir une route appropriée dans le réseau de communication maillé 120 depuis un dispositif nœud source (par exemple le dispositif nœud 133) jusqu'à un dispositif nœud destination (par exemple le dispositif nœud 132), il est connu que le dispositif nœud source diffuse (« broadcast » en anglais) une requête de découverte de route, appelée RREQ (« Route REQuest » en anglais). Dans le cas G3-PLC Hybrid PLC & RF, la requête RREQ est diffusée sur les deux média PLC et RF. Cette requête de découverte de route est reçue par chaque dispositif nœud dans le voisinage réseau dudit dispositif nœud source. Chaque dispositif nœud dans le voisinage réseau dudit dispositif nœud source relaie, par diffusion, ladite requête si ledit dispositif nœud en question n'est pas le dispositif nœud destination. Par diffusion de proche en proche, plusieurs requêtes de découverte de route sont typiquement reçues par le dispositif nœud destination, chacune de ces requêtes ayant suivi un chemin différent dans le réseau de communication maillé 120.

Chaque dispositif nœud qui est à l'origine d'un message, comme par exemple une requête de découverte de route, y inclut un identifiant qui lui est propre, ainsi qu'un numéro de séquence, tel que défini dans le protocole LOADng. Ce numéro de séquence est une valeur de compteur propre à chaque dispositif nœud du réseau de communication maillé 120. A chaque fois qu'un dispositif nœud génère un nouveau message, ledit dispositif nœud incrémente son compteur et inclut dans le message en question la valeur dudit compteur. Ainsi, lorsqu'un dispositif nœud reçoit un message, ledit dispositif nœud analyse l'identifiant du dispositif nœud à l'origine du message et le numéro de séquence inclus dans le message, et peut déterminer si le message reçu est effectivement un nouveau message ou une nouvelle copie d'un message déjà reçu.

Chaque dispositif nœud peut toutefois décider de ne pas relayer une requête de découverte de route, lorsqu'un ou plusieurs critères ne sont pas remplis. Notamment, avant de décider de relayer ladite requête, le dispositif nœud en question vérifie typiquement si ladite requête comporte une information représentative d'un coût de route, depuis le dispositif nœud source jusqu'au dispositif nœud en question, qui est meilleur que le coût de route représenté par une information contenue dans une autre requête de découverte de route précédemment reçue par le dispositif nœud en question. En d'autres termes, le dispositif nœud en question relaie, par diffusion, ladite requête si ladite requête concerne un chemin qui a suivi, depuis le dispositif nœud source jusqu'au dispositif nœud en question, un trajet de plus faible coût que toute autre requête précédemment reçue par le dispositif nœud en question (donc pour la même découverte de route).

Le coût d'une route peut s'appuyer sur une ou plusieurs métriques. Par exemple, le coût de route est un nombre de sauts (« hops » en anglais) subis par la requête en question depuis le dispositif nœud source. Selon un autre exemple, le coût de route est le résultat d'un calcul qui dépend de la bande passante des liens franchis par la requête en question depuis le dispositif nœud source et/ou de la qualité des liens de communication. Selon encore un autre exemple, le coût de route est proportionnel à la latence subie par la requête en question depuis le dispositif nœud source. D'autres métriques peuvent être utilisées pour établir un coût de route, c'est-à-dire un coût de transit, depuis le dispositif nœud source jusqu'au dispositif nœud destination. Selon encore un autre exemple, le coût de route dépend également du média, i.e. RF ou PLC, utilisé pour transmettre les données entre deux dispositifs nœuds successifs.

Lorsqu'un dispositif nœud décide de relayer, par diffusion, une requête de découverte de route, le dispositif nœud en question met à jour l'information de coût de route contenue dans ladite requête, de manière à prendre en compte que ladite requête est passée par le dispositif nœud en question. Ainsi, selon un tel principe, plusieurs requêtes de découverte de route parviennent typiquement au dispositif nœud destination, chacune comportant une information de coût de route que ladite requête a suivie pour être propagée depuis le dispositif nœud source jusqu'au dispositif nœud destination. Le trajet emprunté par ladite requête de découverte de route associée au meilleur coût de route est ensuite sélectionné pour permettre au dispositif nœud source de transmettre des données au dispositif nœud destination. Pour activer la route en question, le dispositif nœud destination transmet une réponse de découverte de route, appelée RREP (« Route REPly » en anglais). Cette réponse de découverte de route est transmise de proche en proche en suivant le chemin inverse de la requête de découverte de route qui était associée au meilleur coût de route. Chaque dispositif nœud recevant la réponse de découverte de route met à jour une table de routage interne, au niveau de la couche liaison de données DLL, afin d'y indiquer que tout message ultérieur transmis en mode point-à-point (« unicast » en anglais) depuis le dispositif nœud source en question vers le dispositif nœud destination en question doit être transmis ou relayé vers tel ou tel dispositif nœud de son voisinage réseau. Au sein de la couche liaison, les tables de routage sont préférentiellement implémentées dans une sous-couche d'adaptation en charge de la mise en œuvre du protocole de routage dans le réseau de communication. Par exemple, cette sous-couche d'adaptation est conforme au protocole 6LoWPAN (pour « IPv6 over Low power Wireless Personal Area Networks » en anglais), qui a été initialement développé pour supporter IPv6 dans le cadre de la norme IEEE 802.15.4. A noter que le protocole 6LoWPAN s'appuie lui-même sur le protocole de routage de type réactif LOADng susmentionné. Une couche d'abstraction hybride (« Hybrid abstraction layer » en anglais) fournit des services appropriés à la sous-couche d'adaptation en vue d'envoyer/recevoir des données vers/de la sous-couche MAC adéquate (acronyme anglais de « Medium Access Control » en anglais), i.e. RF ou PLC.

Grâce aux tables de routage ainsi configurées, des communications point-à-point (« unicast » en anglais) peuvent être effectuées par toute paire de dispositifs nœuds du réseau de communication maillé 120. Des dispositifs nœuds intermédiaires servent donc de relais lorsque les dispositifs nœuds de ladite paire ne sont pas dans le voisinage réseau l'un de l'autre, les communications s'opèrent ainsi de proche en proche, chaque dispositif nœud s'appuyant sur un de ses propres voisins pour faire suivre des messages jusqu'à leurs destinataires respectifs.

Pour communiquer entre dispositifs nœuds voisins (c'est-à-dire des dispositifs nœuds qui sont dans le voisinage réseau l'un de l'autre), les messages sont transmis sous forme de trames modulées. Lorsqu'une trame modulée est spécifiquement adressée à un dispositif nœud voisin et qu'elle est correctement démodulée par celui-ci, ledit dispositif nœud voisin retransmet un acquittement ACK au dispositif nœud qui lui a adressé ladite trame modulée sur la bande fréquentielle ou le canal RF sur lequel la trame modulée a été envoyée. Plusieurs bandes fréquentielles et au moins un canal RF sont définis pour supporter la transmission de ces trames modulées, un schéma de modulation adapté étant associé à chacune de ces bandes fréquentielles et au canal RF. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon. Dans la suite du document, pour alléger le texte, le terme « bande fréquentielle » est utilisé indifféremment pour désigner une bande fréquentielle PLC ou un canal RF.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais) en PLC ou SUN-FSK (acronyme anglais de « Smart Utility Network - Frequency Shift Keying ») en RF.

En termes de bandes fréquentielles utilisables dans le cadre de la mise en œuvre du réseau de communication maillé 120, on peut citer : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; la bande fréquentielle CENELEC B, qui va approximativement de 98 kHz à 122 kHz et la bande fréquentielle pour le canal RF qui va approximativement de 863 MHz à 870 MHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; un quatrième schéma de modulation à seize porteuses dans la bande fréquentielle CENELEC B et un cinquième schéma de modulation de type SUN-FSK pour le canal RF de G3-PLC Hybrid PLC & RF. La modulation SUN-FSK est définie dans la section 20 du document IEEE 802.15.4 :2015.

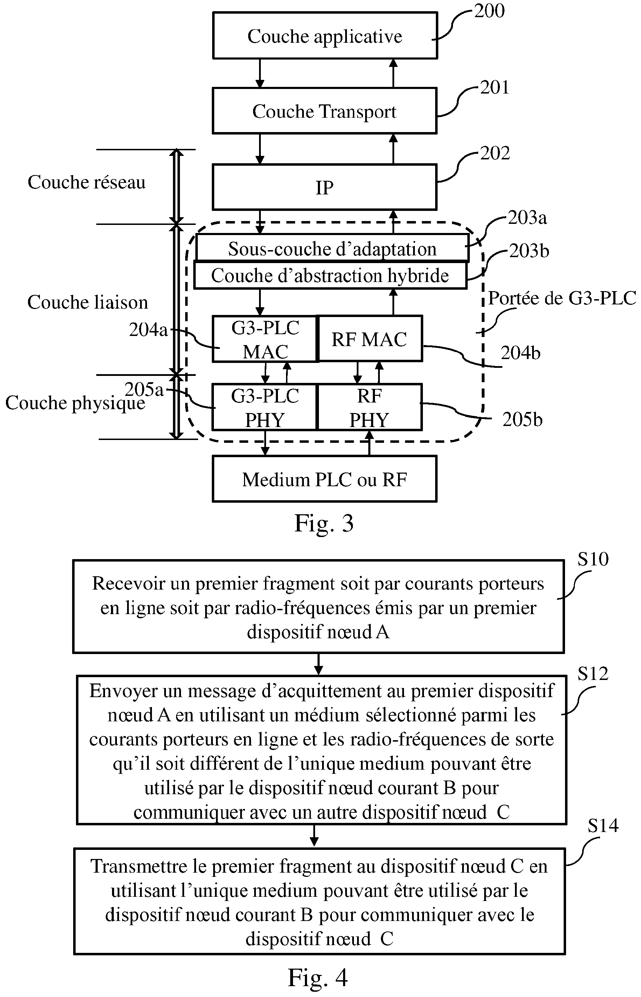

La **Fig. 3** illustre schématiquement les différentes couches d'un modèle OSI dans le cas particulier de la norme G3-PLC Hybrid PLC & RF telle que définie dans l'annexe H de la recommandation ITU-T G.9903 (2017) Amendement 1 (05/2021).

Un message à transmettre provenant d'une couche applicative 200 est transmis à une couche transport 201. La couche transport 201 regroupe l'ensemble des protocoles chargés de la gestion des erreurs et du contrôle des flux réseaux. Les deux principaux protocoles utilisés sont les protocoles TCP et UDP. La couche transport 201 crée des paquets en ajoutant des entêtes aux données en provenance de la couche applicative 200. Les paquets sont ensuite transmis à une couche IP 202, e.g. IPv6. La couche IP 202 encapsule les paquets en provenance de la couche transport 201 en ajoutant notamment un entête IP, e.g. IPv6. Un paquet IPv6 peut faire jusqu'à 1400 octets. Dans le cas où le paquet est de taille supérieure à une valeur de seuil, ce paquet est fragmenté en au moins deux fragments afin de l'adapter aux contraintes d'une sous-couche MAC 204a ou 204b, notamment à la taille des trames MAC.

A cet effet, la norme G3-PLC Hybrid PLC & RF incorpore le protocole 6LoWPAN, lequel permet d'adapter des paquets de données IPv6 aux contraintes des sous-couches MAC 204a ou 204b, notamment en les fragmentant. En effet, les trames MAC utilisées sont de tailles bien inférieures (400 octets maximum disponibles par paquet pour la partie IP) aux paquets IPv6 de 1 400 octets.

Une sous-couche adaptation 203a incorporant le protocole 6LoWPAN et située entre la couche réseau IP 202 et la sous-couche MAC 204a ou 204b du modèle OSI reçoit de la couche réseau IP 202 des paquets IPv6 de 1 280 octets et le cas échéant les fragmente. Bien entendu, dans le cas d'un paquet IP suffisamment petit pour être contenu dans une seule trame MAC G3-PLC ou MAC RF, aucune fragmentation n'est effectuée.

Une couche d'abstraction hybride 203b transfère ensuite le fragment ou le paquet IP en cas d'absence de fragmentation à la sous-couche MAC appropriée 204a ou 204b en fonction du médium choisi pour sa transmission. Dans la suite, le terme fragment est utilisé pour désigner à la fois un fragment obtenu à partir d'un paquet IP fragmenté ou bien le paquet IP lui-même en cas d'absence de fragmentation.

La transmission d'un fragment sur le médium PLC, i.e. sur la ligne de courant, comprend classiquement différentes étapes notamment une segmentation des fragments afin de les adapter à une couche physique G3-PLC PHY 205a et une modulation OFDM du signal. La segmentation consiste à partitionner une trame MAC en PSDUs (acronyme anglais de « PHY Service Data Unit »). Tous les PSDU issus d'un même fragment sont modulés en utilisant un même schéma de modulation.

La transmission d'un fragment par radio-fréquences sur le canal RF comprend différentes étapes notamment une segmentation des fragments afin de les adapter à une couche physique RF PHY 205b et une modulation SUN-FSK du signal. Comme dans le cas PLC, la segmentation consiste à partitionner une trame MAC en PSDUs (acronyme anglais de « PHY Service Data Unit »). Tous les PSDU issus d'un même fragment sont modulés en utilisant un même schéma de modulation. La spécification de la couche physique RF PHY est donnée dans les sections 10, 11 et 20 de la norme IEEE 802.15.4-2015 telle que modifiée par le document IEEE 802.15.4v:2017 et complétée par la Table H-5-1 de la recommandation ITU-T G.9903 (2017) Amendement 1 (05/2021).

Il est à noter que la norme G3-PLC Hybrid PLC & RF impose à chaque dispositif nœud des contraintes sur le temps d'utilisation, sur une fenêtre temporelle glissante, de la transmission par radio-fréquences. Ces contraintes sont définies dans la Table H.6.8 de l'annexe H. A cet effet les valeurs suivantes sont définies au niveau de chaque dispositif nœud :
- macDutyCyclePeriod_RF : une première valeur prédéterminée qui définit une durée, e.g. en secondes, de la fenêtre temporelle glissante (par exemple, macDutyCyclePeriod_RF =3600s) ;
- macDutyCycleLimit_RF : une seconde valeur prédéterminée qui définit une limite absolue, e.g. en secondes, de temps d'utilisation autorisé de la transmission par radio-fréquences sur la fenêtre temporelle glissante (par exemple, macDutyCycleLimit_RF=90s pour les compteurs et macDutyCycleLimit_RF=360s pour le concentrateur de données) ;
- macDutyCycleThreshold_RF : une troisième valeur prédéterminée qui définit un seuil maximum de temps d'utilisation autorisé de la transmission par radio-fréquences au-delà duquel toute transmission par radio-fréquences est interrompue, e.g. exprimé en pourcents (par exemple, macDutyCycleThreshold_RF = 90%, ce qui signifie que les transmissions par radio-fréquences sont arrêtées lorsque l'on atteint 90% de 90 secondes sur les 3600 dernières secondes pour les compteurs, ou 90% de 360 secondes sur les 3600 dernières secondes pour le concentrateur de données) ;
- macDutyCycleUsage_RF : un taux d'utilisation de la transmission par radio-fréquences. Ce taux d'utilisation est calculé sur la fenêtre glissante par rapport à la seconde valeur prédéterminée, i.e. macDutyCycleLimit_RF. La recommandation ITU-T G.9903 (2017) Amendement 1 (05/2021) indique dans la table H.6.8 que macDutyCycleUsage_RF = tps/macDutyCycleLimit_RF*100 où tps est le temps courant d'utilisation de la transmission par radio-fréquences cumulé sur la fenêtre temporelle glissante par le dispositif nœud.

Ce taux d'utilisation est par exemple mis à jour après chaque transmission par radio-fréquences.

La **Fig. 4** illustre schématiquement un procédé de transmission d'un fragment d'un paquet IP selon un mode particulier de réalisation. Dans ce mode de réalisation, le paquet IP à transmettre est fragmenté selon le protocole 6LowPAN car il est trop long pour pouvoir être contenu dans une seule trame MAC. Le procédé de transmission est mis en œuvre dans un dispositif nœud B intermédiaire entre un dispositif nœud A et un dispositif nœud C. Les dispositifs nœuds A et B peuvent communiquer par PLC et par RF alors que les dispositifs nœuds B et C ne peuvent communiquer, au moins de manière transitoire, qu'en utilisant un unique médium de communication, e.g. les radio-fréquences. Dans un exemple de réalisation, les dispositifs nœuds B et C ne peuvent communiquer de manière permanente qu'en utilisant un unique médium de communication, e.g. les radio-fréquences parce qu'ils ne sont pas reliés par un lien PLC. Dans un autre exemple de réalisation, les dispositifs nœuds B et C peuvent communiquer en utilisant les deux média de communication mais de manière transitoire ne peuvent communiquer qu'en utilisant un unique médium de communication, e.g. les courants porteurs en ligne. C'est notamment le cas si le taux d'utilisation de la transmission par radio-fréquences macDutyCycleUsage_RF a atteint le seuil macDutyCycleThreshold_RF. Dans ce dernier cas, la communication par radio-fréquences leur est interdite. Dit autrement, ils ne peuvent communiquer de manière transitoire, i.e. tant que le taux d'utilisation de la transmission par radio-fréquences macDutyCycleUsage_RF est supérieur ou égal au seuil macDutyCycleThreshold_RF, qu'en utilisant les courants porteurs en ligne.

Lors d'une étape S10, le dispositif nœud B reçoit un premier fragment transmis par le dispositif nœud A en utilisant soit les courants porteurs en ligne soit les radio-fréquences.

Lors d'une étape S12, le dispositif nœud B envoie un message d'acquittement au dispositif nœud A en utilisant un médium sélectionné parmi les courants porteurs en ligne et les radio-fréquences de sorte qu'il soit différent de l'unique médium pouvant être utilisé par le dispositif nœud B pour communiquer avec le dispositif nœud C. Ainsi, le médium utilisé pour envoyer le message d'acquittement est sélectionné indépendamment du médium utilisé pour la transmission du premier fragment de A vers B.

Dans un mode de réalisation particulier, il est tenu compte de la contrainte sur les communications par radio-fréquences et plus particulièrement il est tenu compte du seuil maximum d'utilisation des radio-fréquences. Ainsi, quand l'unique médium pouvant être utilisé par le dispositif nœud B pour communiquer avec le dispositif nœud C est le médium PLC, alors le médium sélectionné à l'étape S12 est le médium RF. Dans le cas particulier où le seuil maximum d'utilisation des radio-fréquences est atteint, i.e. macDutyCycleUsage_RF ≥macDutyCycleThreshold_RF, alors l'étape S12 n'est pas mise en œuvre. Dit autrement le dispositif nœud B envoie un message d'acquittement au dispositif nœud A en utilisant le médium PLC et non le médium sélectionné RF.

Lors d'une étape S14, le dispositif nœud B transmet le premier fragment au dispositif nœud C en utilisant ledit premier médium.

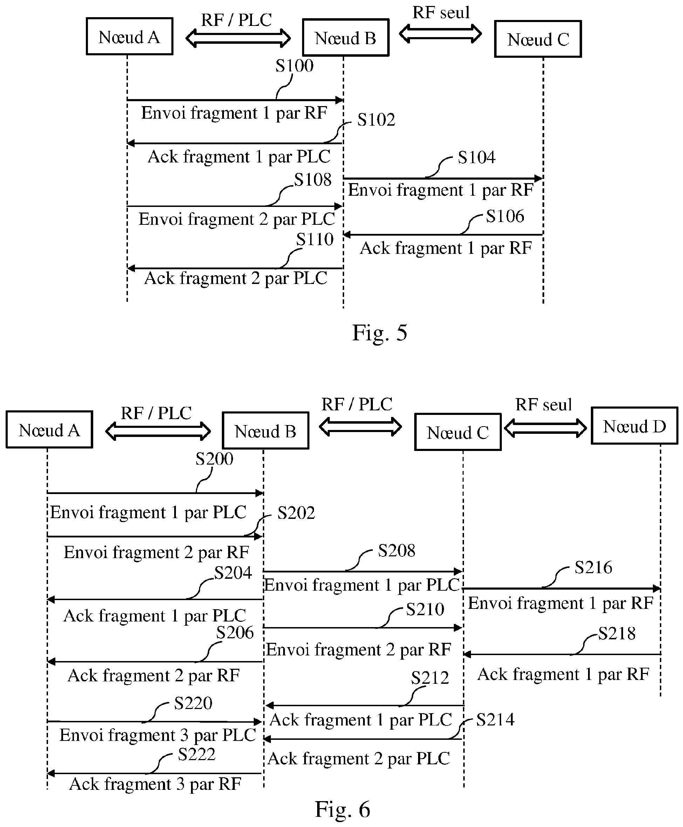

La **Fig. 5** illustre schématiquement un procédé de transmission d'un fragment d'un paquet IP selon un mode particulier de réalisation. Dans ce mode de réalisation, le paquet IP à transmettre est fragmenté selon le protocole 6LowPAN car il est trop long pour pouvoir être contenu dans une seule trame MAC. Les dispositifs nœuds A et B peuvent communiquer par PLC et par RF alors que les dispositifs nœuds B et C ne peuvent communiquer, au moins de manière transitoire, qu'en utilisant un unique médium de communication, e.g. les radio-fréquences.

Lors d'une étape S100, le dispositif nœud A transmet un premier fragment, noté fragment 1, du paquet IP au dispositif nœud B en utilisant par exemple les radio-fréquences. Ce fragment est reçu par le dispositif nœud B.

Lors d'une étape S102, le dispositif nœud B envoie en retour un message d'acquittement au dispositif nœud A pour lui indiquer qu'il a bien reçu le premier fragment. Dans l'état de l'art, le message d'acquittement est envoyé en utilisant le même médium de communication que celui utilisé pour la transmission du fragment. Selon l'état de l'art, le message d'acquittement serait transmis par radio-fréquences.

Dans le présent mode de réalisation, le dispositif nœud B envoie au contraire un message d'acquittement en utilisant un médium différent de celui utilisé pour communiquer avec le dispositif nœud C. Ainsi, le médium utilisé pour transmettre le message d'acquittement est indépendant du médium utilisé pour envoyer le premier fragment. Dans le cas présent, le dispositif nœud B reçoit le premier fragment transmis par radio-fréquences et envoie un message d'acquittement par courants porteurs en ligne. Le message d'acquittement est reçu par le dispositif nœud A.

Par la suite, le dispositif nœud A transmet tous les prochains fragments du paquet IP en utilisant uniquement le médium sur lequel il a reçu l'acquittement. Dans le cas présent, le dispositif nœud A enverra les prochains fragments au dispositif nœud B par courants porteurs en ligne.

Lors d'une étape S104, le dispositif nœud B transmet le fragment 1 au dispositif nœud C par RF puisqu'il s'agit du seul médium de communication possible entre les dispositifs nœuds B et C. Lors d'une étape S106, le dispositif nœud C envoie au dispositif nœud B un message d'acquittement par radio-fréquences.

Lors d'une étape S108, le dispositif nœud A transmet un second fragment, noté fragment 2, au dispositif nœud B. Pour ce faire, il n'a pas besoin d'attendre que le canal RF utilisé par B et C pour transmettre le fragment 1 et le message d'acquittement associé soit libéré. La latence pour transmettre le paquet IP est donc réduite. En effet, le dispositif nœud A en utilisant pour transmettre les prochains fragments le même médium que celui utilisé par le dispositif nœud B pour transmettre le message d'acquittement est certain d'utiliser un médium différent de celui utilisé entre les dispositifs nœuds B et C. Il n'y a donc plus de conflit dans la transmission.

Lors d'une étape S110, le dispositif nœud B envoie au dispositif nœud A un message d'acquittement en utilisant toujours le médium différent de celui utilisé pour communiquer avec le dispositif nœud C, i.e. les courants porteurs en ligne dans le cas de la Fig. 4. Il est à noter que l'étape S104 peut avoir lieu avant ou après les étapes S108 et S110 ou encore entre ces deux étapes.

La **Fig. 6** illustre schématiquement un procédé de transmission d'un fragment d'un paquet IP selon un mode particulier de réalisation. Dans ce mode de réalisation, le paquet IP à transmettre est fragmenté selon le protocole 6LowPAN car il est trop long pour pouvoir être contenu dans une seule trame MAC. Les dispositifs nœuds A et B peuvent communiquer soit par PLC soit par RF, les dispositifs nœuds B et C peuvent communiquer soit par PLC soit par RF et les dispositifs nœuds C et D ne peuvent communiquer, au moins de manière transitoire, qu'en utilisant un unique médium de communication, e.g. RF.

Lors d'une étape S200, le dispositif nœud A transmet un premier fragment, noté fragment 1, du paquet IP au dispositif nœud B en utilisant un des deux média de communication, e.g. les courants porteurs en ligne dans le cas de la Fig. 6.

Lors d'une étape S202, le dispositif nœud A transmet, sans attendre la réception de message d'acquittement, un second fragment, noté fragment 2, du paquet IP au dispositif nœud B en utilisant l'autre des deux média de communication, e.g. les radio-fréquences dans le cas de la Fig. 6.

Lors d'une étape S204, le dispositif nœud B envoie un premier message d'acquittement comme dans l'état de l'art, i.e. en utilisant le même médium que celui utilisé par le dispositif nœud A pour transmettre le fragment 1, i.e. les courant porteurs en ligne dans le cas de la Fig. 6.

Lors d'une étape S206, le dispositif nœud B envoie un second message d'acquittement comme dans l'état de l'art, i.e. en utilisant le même médium que celui utilisé par le dispositif nœud A pour transmettre le fragment 2, i.e. les radio-fréquences dans le cas de la Fig. 6.

Lors d'une étape S208, le dispositif nœud B transmet au dispositif nœud C le fragment 1. Sur la Fig. 6, il transmet le fragment 1 par courants porteurs en ligne.

Lors d'une étape S210, le dispositif nœud B transmet au dispositif nœud C le fragment 2. Sur la Fig. 6, il transmet le fragment 2 par radio-fréquences.

Le dispositif nœud C ne peut communiquer avec le dispositif nœud D qu'en utilisant les radio-fréquences, le dispositif nœud C va donc envoyer des messages d'acquittement au dispositif nœud B en utilisant un médium qui est différent de celui qu'il utilise nécessairement pour communiquer avec le dispositif nœud D. Dans l'exemple de la Fig.5, lors d'une étape S212, le dispositif nœud C envoie, suite à la réception du fragment 1, un premier message d'acquittement au dispositif nœud B par courants porteurs en ligne. De même, lors d'une étape S214, le dispositif nœud C envoie, suite à la réception du fragment 2, un second message d'acquittement au dispositif nœud B par courants porteurs en ligne. Ainsi, même si le second fragment est reçu transmis par le B à C par radio-fréquences, le second message d'acquittement est envoyé par C à B par courants porteurs en ligne. Ainsi, le dispositif nœud C informe le dispositif nœud B de lui envoyer les prochains fragments par courants porteurs en ligne en envoyant des messages d'acquittement uniquement par courants porteurs en ligne.

Lors d'une étape S216, le dispositif nœud C envoie au dispositif nœud D le fragment 1 par radio-fréquences. Lors d'une étape S218, le dispositif nœud D envoie à son tour un message d'acquittement au dispositif nœud C pour lui indiquer qu'il a bien reçu le fragment 1.

Lors d'une étape S220, le dispositif nœud A transmet un troisième fragment, noté fragment 3, du paquet IP au dispositif nœud B en utilisant un des deux média de communication, e.g. les courants porteurs en ligne dans le cas de la Fig. 6.

Lors d'une étape S222, le dispositif nœud B envoie un message d'acquittement non plus comme dans l'état de l'art mais en utilisant un médium différent de celui qu'il utilise pour communiquer avec le dispositif nœud C. Ainsi, dans le cas de la Fig. 6, le dispositif nœud B envoie un message d'acquittement au dispositif nœud A par radio-fréquences.

A son tour, le dispositif nœud B signale au dispositif nœud A de lui envoyer les prochains fragments sur un médium différent de celui utilisé entre B et C. Bien entendu, le fragment 2 est également transmis de C à D et le fragment 3 est également transmis de B à C et de C à D, même si ces étapes ne sont pas représentées sur le Fig. 6.

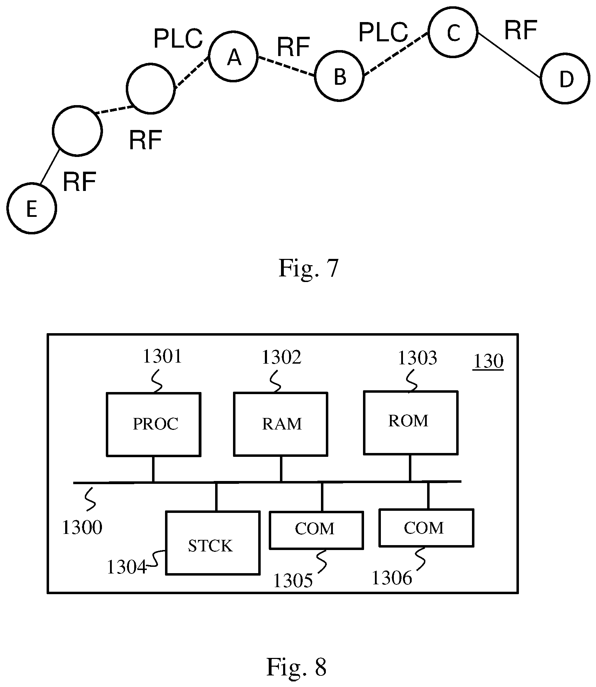

Ainsi, de manière complément automatique, le schéma de transmission est adapté pour réduire le temps de latence. Plus précisément, le schéma de transmission est adapté pour qu'il existe une alternance de médium de communication entre paires de dispositifs nœuds successifs. Ainsi, en référence à la Fig. 6, les radio-fréquences sont utilisées pour communiquer entre A et B, les courants porteurs en ligne sont utilisés entre B et C et les radio-fréquences sont utilisées pour communiquer entre C et D. Le dispositif nœud D n'étant pas un nœud hydride, il n'a la possibilité d'utiliser qu'un seul médium de communication. C'est donc le dispositif nœud D qui détermine cette alternance. Autrement dit, le choix du médium de communication est propagé de proche en proche depuis le dispositif nœud D vers le dispositif nœud A grâce à la transmission des messages d'acquittement sur un médium approprié. Bien entendu, dès qu'un dispositif nœud E en amont du dispositif nœud A n'est pas un nœud hybride et ne peut donc transmettre ou recevoir des messages que sur un seul médium, la propagation du choix du médium de communication s'interrompt. Le temps de transmission est quand même accéléré sur la portion du chemin comprise entre le dispositif nœud D et ce dispositif nœud E comme illustré sur la **Fig. 7****.** Sur la Fig. 7, le dispositif nœud E ne peut communiquer que par radio-fréquences. Sur cette figure, les liens de communication en trait plein indiquent qu'un seul médium de communication peut être utilisé et les traits en pointillés indiquent que les deux média de communication peuvent être utilisés. Dans ce dernier cas, la sélection d'un des deux média est effectuée selon le procédé décrit précédemment en référence aux Figs. 4 à 6.

Dans un mode particulier de réalisation, les procédés décrits en référence aux Figs 5 et 6 sont mis en œuvre en tenant compte de la contrainte sur les communications par radio-fréquences et plus particulièrement en tenant compte du seuil maximum d'utilisation des radio-fréquences comme cela a été décrit précédemment en référence à la Fig. 4.

La **Fig. 8** illustre schématiquement un exemple d'architecture matérielle d'un dispositif nœud 130 du réseau de communication maillé 120 selon un mode de réalisation. Un tel dispositif nœud 130 est par exemple un compteur ou un concentrateur de données.

Selon l'exemple d'architecture matérielle représenté à la Fig. 8, le dispositif nœud 130 comprend alors, reliés par un bus de communication 1300 : un processeur ou CPU (« Central Processing Unit » en anglais) 1301 ; une mémoire vive RAM (« Random Access Memory » en anglais) 1302; une mémoire morte ROM (« Read Only Memory » en anglais) 1303; une unité de stockage 1304 telle qu'un disque dur ou telle qu'un lecteur de support de stockage, e.g. un lecteur de cartes SD (« Secure Digital » en anglais); au moins une première interface de communication 1305 permettant au dispositif nœud 130 de communiquer avec les dispositifs nœuds appartenant à son voisinage réseau, e.g. les dispositifs nœuds 131 et 133 par courants porteurs en ligne et au moins une seconde interface de communication 1306 permettant au dispositif nœud 130 de communiquer avec les dispositifs nœuds appartenant à son voisinage réseau par radio-fréquences.

Le processeur 1301 est capable d'exécuter des instructions chargées dans la RAM 1302 à partir de la ROM 1303, d'une mémoire externe (non représentée), d'un support de stockage (tel qu'une carte SD), ou d'un réseau de communication. Lorsque le dispositif nœud est mis sous tension, le processeur 1301 est capable de lire de la RAM 1302 des instructions et de les exécuter. Ces instructions forment un programme d'ordinateur causant la mise en œuvre, par le processeur 1301, de tout ou partie des procédés décrits en relation avec les Figs. 4 à 6.

Les procédés décrits en relation avec les Figs. 4 à 6 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). En général, le dispositif nœud 130 comprend de la circuiterie électronique configurée pour mettre en œuvre les procédés décrits en relation avec les Figs. 4 à 6.

## Revendications

1. Un procédé de transmission pour transmettre un fragment d'un paquet IP à partir d'un premier dispositif nœud vers un troisième dispositif nœud au travers d'un second dispositif nœud appartenant à un voisinage réseau desdits premier et troisième dispositifs nœuds, lesdits premier, second et troisième dispositifs nœuds appartenant à un réseau d'alimentation électrique, lesdits premier et second dispositifs nœuds étant configurés pour communiquer par courants porteurs en ligne et par radio-fréquences, lesdits second et troisième dispositifs nœuds ne pouvant communiquer qu'en utilisant un unique médium de communication, dit premier médium, parmi les courants porteurs en ligne et les radio-fréquences, le procédé de transmission comprend les étapes suivantes mises en œuvre par le second dispositif nœud :
- recevoir (S10, S100, S204) un premier fragment émis par ledit premier dispositif nœud soit par courants porteurs en ligne soit par radio-fréquences; et
- envoyer (S12, S102, S206) un message d'acquittement audit premier dispositif nœud en utilisant un second médium de communication sélectionné parmi les courants porteurs en ligne et les radio-fréquences de sorte qu'il soit différent dudit premier médium ;
- transmettre (S14, S104, S208) ledit premier fragment audit troisième dispositif nœud en utilisant ledit premier médium de communication ; et
- transmettre (S108) audit second dispositif nœud les fragments du paquet IP suivant ledit premier fragment en utilisant uniquement ledit second médium de communication.

2. Le procédé selon la revendication 1, dans lequel ledit paquet IP est fragmenté par une sous-couche d'adaptation incorporant le protocole 6LowPAN.

3. Le procédé selon l'une quelconque des revendications 1 à 2, dans lequel dans le cas où un fragment du paquet IP est transmis par courants porteurs en ligne, ledit fragment est transmis sur au moins une bande fréquentielle appartenant à un ensemble de bandes fréquentielles comprenant :
- la bande fréquentielle CENELEC A;
- la bande fréquentielle CENELEC B; et
- la bande fréquentielle FCC ou la bande fréquentielle ARIB.

4. Le procédé selon l'une quelconque des revendications 1 à 3 dans lequel dans le cas où un fragment du paquet IP est transmis par radio-fréquences, ledit fragment est transmis sur une bande fréquentielle allant de 863 MHz à 870 MHz.

5. Un dispositif nœud intermédiaire entre un premier dispositif nœud et un second dispositif nœud, ledit dispositif nœud intermédiaire et lesdits premier et second dispositifs nœuds appartenant à un réseau d'alimentation électrique et ledit dispositif nœud intermédiaire appartenant à un voisinage réseau desdits premier et second dispositifs nœuds, le premier dispositif nœud et ledit nœud intermédiaire étant configurés pour communiquer par courants porteurs en ligne et par radio-fréquences, ledit second dispositif nœud et ledit dispositif nœud intermédiaire ne pouvant communiquer qu'en utilisant un unique médium de communication, dit premier médium, parmi les courants porteurs en ligne et les radio-fréquences, le dispositif nœud intermédiaire comprenant :
- des moyens (1305, 1306) pour recevoir un premier fragment émis par ledit premier dispositif nœud soit par courants porteurs en ligne soit par radio-fréquences ; et
- des moyens (1305, 1306) pour envoyer un message d'acquittement audit premier dispositif nœud en utilisant un second médium de communication sélectionné parmi les courants porteurs en ligne et les radio-fréquences de sorte qu'il soit différent dudit premier médium ;
- des moyens (1305, 1306) pour transmettre ledit premier fragment audit second dispositif nœud en utilisant ledit premier médium ; et
- des moyens (1305, 1306) pour transmettre audit second dispositif nœud les fragments du paquet IP suivant ledit premier fragment en utilisant uniquement ledit second médium de communication.

6. Un produit programme d'ordinateur **caractérisé en ce qu'**il comprend des instructions pour mettre en œuvre le procédé de transmission selon l'une quelconque des revendications 1 à 4, lorsque ledit programme est exécuté par un processeur.

7. Un support de stockage **caractérisé en ce qu'**il stocke un programme d'ordinateur comprenant des instructions pour mettre en œuvre le procédé de transmission selon l'une quelconque des revendications 1 à 4, lorsque ledit programme est exécuté par un processeur.

## Patentansprüche

1. Übertragungsverfahren zur Übertragung eines Fragments eines IP-Pakets von einer ersten Knotenvorrichtung zu einer dritten Knotenvorrichtung durch eine zweite Knotenvorrichtung, die zu einer Netzwerkumgebung der ersten und dritten Knotenvorrichtung gehört, wobei die erste, zweite und dritte Knotenvorrichtung zu einem Stromversorgungsnetz gehören, wobei die erste, zweite und zweite Knotenvorrichtung dazu ausgebildet sind, über Powerline und über Funkfrequenzen zu kommunizieren, wobei die zweite und dritte Knotenvorrichtung nur unter Verwendung eines einzigen Kommunikationsmediums, erstes Medium genannt, von Powerline und Funkfrequenzen kommunizieren können,
das Übertragungsverfahren die folgenden Schritte umfasst, die von der zweiten Knotenvorrichtung durchgeführt werden:
- Empfangen (S10, S100, S204) eines ersten Fragments, das von der ersten Knotenvorrichtung entweder über Powerline oder über Funkfrequenzen ausgesendet wird; und
- Senden (S12, S102, S206) einer Quittierungsnachricht an die erste Knotenvorrichtung unter Verwendung eines zweiten Kommunikationsmediums, das aus Powerline und Funkfrequenzen ausgewählt wird, so dass es sich vom ersten Medium unterscheidet,
- Übertragen (S14, S104, S208) des ersten Fragments an die dritte Knotenvorrichtung unter Verwendung des ersten Kommunikationsmediums; und
- Übertragen (S108) der Fragmente des IP-Pakets, die auf das erste Fragment folgen, an die zweite Knotenvorrichtung nur unter Verwendung des zweiten Kommunikationsmediums.

2. Verfahren nach Anspruch 1, wobei das IP-Paket durch eine Anpassungsunterschicht fragmentiert wird, die das 6LowPAN-Protokoll beinhaltet.

3. Verfahren nach einem der Ansprüche 1 bis 2, wobei, falls das Fragment des IP-Pakets über Powerline übertragen wird, das IP-Paket auf wenigstens einem Frequenzband übertragen wird, das zu einer Menge von Frequenzbändern gehört, die Folgendes umfasst:
- das Frequenzband CENELEC A;
- das Frequenzband CENELEC B; und
- das Frequenzband FCC oder das Frequenzband ARIB.

4. Verfahren nach einem der Ansprüche 1 bis 3, wobei, falls ein Fragment des IP-Pakets über Funkfrequenzen übertragen wird, das IP-Paket auf einem Frequenzband übertragen wird, das von 863 MHz bis 870 MHz reicht.

5. Zwischenknotenvorrichtung zwischen einer ersten Knotenvorrichtung und einer zweiten Knotenvorrichtung, wobei die Zwischenknotenvorrichtung und die erste und zweite Knotenvorrichtung zu einem Stromversorgungsnetz gehören und die Zwischenknotenvorrichtung zu einer Netzwerkumgebung der ersten und zweiten Knotenvorrichtung gehört, wobei die erste Knotenvorrichtung und die Zwischenknotenvorrichtung dazu ausgebildet sind, über Powerline und über Funkfrequenzen zu kommunizieren, wobei die zweite Knotenvorrichtung und die Zwischenknotenvorrichtung nur unter Verwendung eines einzigen Kommunikationsmediums, erstes Medium genannt, von Powerline und Funkfrequenzen kommunizieren können, wobei die Zwischenknotenvorrichtung Folgendes umfasst:
- Mittel (1305, 1306) zum Empfangen eines ersten Fragments, das von der ersten Knotenvorrichtung entweder über Powerline oder über Funkfrequenzen ausgesendet wird, und
- Mittel (1305, 1306) zum Senden einer Quittierungsnachricht an die erste Knotenvorrichtung unter Verwendung eines zweiten Kommunikationsmediums, das aus Powerline und Funkfrequenzen ausgewählt wird, so dass es sich vom ersten Medium unterscheidet,
- Mittel (1305, 1306) zum Übertragen des ersten Fragments an die zweite Knotenvorrichtung unter Verwendung des ersten Mediums, und
- Mittel (1305, 1306) zum Übertragen der Fragmente des IP-Pakets, die auf das erste Fragment folgen, an die zweite Knotenvorrichtung nur unter Verwendung des zweiten Kommunikationsmediums.

6. Computerprogrammprodukt, **dadurch gekennzeichnet, dass** es Anweisungen zur Durchführung des Übertragungsverfahrens nach einem der Ansprüche 1 bis 4 bei Ausführung des Programms durch einen Prozessor umfasst.

7. Speichermedium, **dadurch gekennzeichnet, dass** es ein Computerprogramm speichert, das Anweisungen zur Durchführung des Übertragungsverfahrens nach einem der Ansprüche 1 bis 4 bei Ausführung des Programms durch einen Prozessor umfasst.

## Claims

1. A transmission method for transmitting a fragment of an IP packet from a first node device to a third node device through a second node device belonging to a network neighbourhood of said first and third node devices, said first, second and third node devices belonging to an electrical supply network, said first and second node devices being configured to communicate by powerline and by radio frequency, said second and third node devices being able to communicate only using a single communication medium, referred to as the first medium, from powerline and radio frequency,
the transmission method comprises the following steps performed by the second node device:
- receiving (S10, S100, S204) a first fragment sent by said first node device either by powerline or by radio frequency; and
- sending (S12, S102, S206) an acknowledgement message to said first node device using a second communication medium selected from powerline and radio frequency so that it is different from said first medium;
- transmitting (S14, S104, S208) said first fragment to said third node device using said first communication medium; and
- transmitting (S108) to said second node device the fragments of the IP packet following said first fragment using only said second communication medium.

2. The method according to claim 1, wherein said IP packet is fragmented by an adaptation sub-layer incorporating the 6LoWPAN protocol.

3. The method according to either one of claims 1 to 2, wherein, in the case where a fragment of the IP packet is transmitted by powerline, said fragment is transmitted on at least one frequency band belonging to a set of frequency bands comprising:
- the CENELEC A frequency band;
- the CENELEC B frequency band; and
- the FCC frequency band or the ARIB frequency band.

4. The method according to any one of claims 1 to 3, wherein, in the case where the fragment of the IP packet is transmitted by radio frequency, said fragment is transmitted on a frequency band ranging from 863 MHz to 870 MHz.

5. An intermediate node device between a first node device and a second node device, said intermediate node device and said first and second node devices belonging to an electrical supply network and said intermediate node device belonging to a network neighbourhood of said first and second node devices, the first node device and said intermediate node being configured to communicate by powerline and by radio frequency, said second node device and said intermediate node device being able to communicate only using a single communication medium, referred to as the first medium, from powerline and radio frequency, the intermediate node device comprising:
- means (1305, 1306) for receiving a first fragment sent by said first node device either by powerline or by radio frequency; and
- means (1305, 1306) for sending an acknowledgement message to said first node device using a second communication medium selected from powerline and radio frequency so that it is different from said first medium;
- means (1305, 1306) for transmitting said first fragment to said second node device using said first medium; and
- means (1305, 1306) for transmitting to said second node device the fragments of the IP packet following said first fragment using only said second communication medium.

6. A computer program product, **characterised in that** it comprises instructions for implementing the transmission method according to any one of claims 1 to 4, when said program is executed by a processor.

7. A storage medium, **characterised in that** it stores a computer program comprising instructions for implementing the transmission method according to any one of claims 1 to 4, when said program is executed by a processor.
